# EUROPÄISCHE PATENTANMELDUNG

(11) **EP 4 582 243 A1**
(43) Veröffentlichungstag der Anmeldung: **09.07.2025**
(21) Anmeldenummer: 24150394.5
(22) Anmeldetag: 04.01.2024
(51) Int. Cl.: B29C 64/393, B23K 9/04, B22F 10/18, B22F 10/85, B29C 64/118, B29C 64/307, B33Y 10/00, B33Y 30/00, B33Y 40/00, B33Y 50/02, B65H 63/00

(54) **VERFAHREN ZUM BESTIMMEN EINES FILAMENTSTAUS FÜR EINE DREIDIMENSIONALE DRUCKEINRICHTUNG MITTELS EINER SENSOREINRICHTUNG, COMPUTERPROGRAMMPRODUKT, COMPUTERLESBARES SPEICHERMEDIUM, SENSOREINRICHTUNG SOWIE DREIDIMENSIONALE DRUCKEINRICHTUNG**

(71) Anmelder: Siemens Aktiengesellschaft, 80333 München (DE)
(72) Erfinder: Rothbauer, Stefan, 86156 Augsburg (DE); Salecker, Jürgen, 81827 München (DE)
(74) Vertreter: Siemens Patent Attorneys

(57) **Zusammenfassung**

Die Erfindung betrifft ein Verfahren zum Bestimmen eines Filamentstaus für eine Dreidimensionale-Druckeinrichtung (10) mittels einer Sensoreinrichtung (14), mit den Schritten: Bereitstellen eines Sensors (18) der Sensoreinrichtung (14) an einer Filamentrolle (12) der Dreidimensionalen-Druckeinrichtung (10); Erfassen einer Drehung (22) der Filamentrolle (12) mittels des Sensors (18); und Bei einer Nicht-Erfassung einer Drehung (22), Bestimmen des Filamentstaus mittels einer elektronischen Recheneinrichtung (20) der Sensoreinrichtung (14). Ferner betrifft die Erfindung ein Computerprogrammprodukt, ein computerlesbares Speichermedium, eine Sensoreinrichtung (14) sowie eine Dreidimensionale-Druckeinrichtung (10).

## Beschreibung

Verfahren zum Bestimmen eines Filamentstaus für eine dreidimensionale Druckeinrichtung mittels einer Sensoreinrichtung, Computerprogrammprodukt, computerlesbares Speichermedium, Sensoreinrichtung sowie dreidimensionale Druckeinrichtung
Die Erfindung betrifft ein Verfahren zum Bestimmen eines Filamentstaus für eine Dreidimensionale-Druckeinrichtung mittels einer Sensoreinrichtung gemäß dem geltenden Patentanspruch 1. Ferner betrifft die Erfindung ein Computerprogrammprodukt, ein computerlesbares Speichermedium, eine Sensoreinrichtung sowie eine Dreidimensionale-Druckeinrichtung.

Druckvorgänge bei Dreidimensionalen-Druckeinrichtungen, welche auch als 3D-Drucker bezeichnet werden, sind zeit- und materialintensiv. Fehler im Druckprozess, die nicht erkannt werden, führen zu unnötigem Materialverbrauch und zu zusätzlichen Auslastungen der Maschine, die damit nicht für weitere Druckvorgänge zur Verfügung steht und auch weiterhin abgenutzt wird. Das reduziert sowohl die Wirtschaftlichkeit als auch die Nachhaltigkeitsbilanz dieses Fertigungsverfahrens.

Insbesondere bei sogenannten semi-professionellen 3D-Druckern gibt es derzeit keine Erkennung, dass ein Filamentstau aufgetreten ist. Dieses Problem tritt unter anderen mit den semi-professionellen Druckern auf, der Drucker druckt dann bis zum manuellen Stopp des Druckprozesses "Luft". Aufgrund dieses langen "Luftdruckens" hat sich Filament oftmals im Extruder gestaut und verklebt, eine Säuberungsaktion dauert mehrere Stunden und hätte vermieden werden können, wenn insbesondere das Problem früher hätte erkannt werden können.

Solche Staus können aus verschiedenen Gründen, beispielsweise aufgrund eines Klemmens der Filamentrolle, der Extruder ist zu schwach eingestellt und schafft es nicht, das Filament zu transportieren, der Extrudermotor ist defekt oder dergleichen auftreten.

Dabei kann es für den Nutzer sehr ärgerlich sein, wenn ein Stau nicht zeitnah erkannt wird, denn meistens ist das zugrundeliegende Problem trivial und kann schnell behoben werden.

Sehr oft liegen die Druckzeiten bei dreidimensionalen Druckern im Bereich von mehreren Stunden, beziehungsweise in einer Fertigungshalle sind davon eventuell eine Großzahl von Druckern im Betrieb. Umso wichtiger ist das rechtzeitige Erkennen solch eines Problems. Die hohen Investitionskosten für die Drucker lohnen für den Betreiber nur, wenn der Drucker nahezu vollständig ausgelastet ist und korrekte Endergebnisse produziert. Unproduktive Zeiten im Druck, insbesondere sogenanntes Luftdrucken beziehungsweise ein Ergebnis ist nicht verwendbar und die dadurch entstehende Wiederholung des Druckprozesses sind somit ein großes Problem für das wirtschaftliche Betreiben von dreidimensionalen Druckern. Auch verlängerte Stillstandszeiten aufgrund der oben genannten Probleme bei spätem Erkennen tragen hierzu bei. Daneben spielen die Materialkosten für das unnötig verbrauchte Material beziehungsweise für die Fehldrucke verwendeten Rohstoffe eine Rolle. Unnötige Materialverwendung trägt auch dazu bei, dass die Nachhaltigkeitsbilanz dieses Fertigungsverfahrens schlechter ist, als sie sein könnte.

Aufgabe der vorliegenden Erfindung ist es, ein Verfahren, ein Computerprogrammprodukt, ein computerlesbares Speichermedium, eine Sensoreinrichtung sowie eine Dreidimensionale-Druckeinrichtung zu schaffen, mittels welchen ein Filamentstau zuverlässig, insbesondere während eines Druckvorgangs, bestimmt werden kann.

Diese Aufgabe wird durch ein Verfahren, ein Computerprogrammprodukt, ein computerlesbares Speichermedium, eine Sensoreinrichtung sowie eine Dreidimensionale-Druckeinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Bestimmen eines Filamentstaus für eine Dreidimensionale-Druckeinrichtung mittels einer Sensoreinrichtung. Es wird ein Sensor der Sensoreinrichtung an einer Filamentrolle der Dreidimensionalen-Druckeinrichtung bereitgestellt. Es erfolgt das Erfassen einer Drehung der Filamentrolle mittels des Sensors. Bei einer Nicht-Erfassung einer Drehung erfolgt das Bestimmen eines Filamentstaus mittels einer elektronischen Recheneinrichtung der Sensoreinrichtung.

Somit kann auf einfache Art und Weise ein Sensor an der Filamentrolle angeordnet werden, wobei auf Basis der Drehung der Filamentrolle wiederum auf einen Betriebszustand, insbesondere auf einen Filamentstau, geschlossen werden kann oder nicht.

Insbesondere, sollte sich die Filamentrolle beispielsweise während des Druckens drehen, so kann davon ausgegangen werden, dass kein Filamentstau vorliegt. Sollte sich jedoch die Rolle nicht drehen, so kann dies ein sehr eindeutiger Hinweis darauf sein, dass ein Filamentstau vorliegt. Somit kann mithilfe eines einfachen Sensors an der Filamentrolle zuverlässig der Filamentstau bestimmt werden.

Dies führt insbesondere dazu, dass beispielsweise entsprechende Benachrichtigungen an einen Nutzer der Dreidimensionalen-Druckeinrichtung gesendet werden können, sodass dieser frühzeitig den Filamentstau erkennen kann und beispielsweise einen Druck abbrechen kann beziehungsweise in Kenntnis gesetzt ist, dass ein Filamentstau vorliegt. Somit können entsprechende Gegenmaßnahmen frühzeitig eingeleitet werden, sodass die bereits beschriebenen Nachteile überwunden sind.

Insbesondere reduziert sich somit der Überwachungsaufwand durch Bedienpersonal. Des Weiteren können potentiell auftretende Probleme frühzeitig erkannt und der Druckvorgang kann zu einem früheren Zeitpunkt abgebrochen werden. Dies reduziert insbesondere den Materialverbrauch sowie unproduktive Druckerstunden und die Druckerabnutzung wird ebenfalls reduziert. Insgesamt kann somit ein wirtschaftlicher und nachhaltiger Betrieb der Dreidimensionalen-Druckereinrichtung realisiert werden.

Der Sensor kann beispielsweise zerstörungsfrei lösbar an der Filamentrolle angeordnet werden und beispielsweise nach Aufbrauch des Filaments erneut bei einer weiteren Filamentrolle angeordnet werden.

Gemäß einer vorteilhaften Ausgestaltungsform wird mittels eines Magnetsensors als der Sensor die Drehung erfasst. Insbesondere kann somit ein Impulsgeber, insbesondere in Form eines Magnets, auf die Filamentrolle beziehungsweise die Filamentrollen und mit diesem Impulsgeber und einem Magnetsensor die entsprechende Umdrehung der Rolle gemessen werden. Somit kann auf einfache Art und Weise die Drehung bestimmt werden und somit ein Filamentstau bestimmt werden.

Eine weitere vorteilhafte Ausgestaltungsform sieht vor, dass eine Umdrehungsgeschwindigkeit zum Bestimmen der Drehung erfasst wird. Insbesondere kann die genaue Geschwindigkeit der Umdrehung entsprechend bestimmt werden. Insbesondere, da es sich bei diesen 3D-Druckern und bei dem Abrollen der Filamentrolle um eine sehr langsame Geschwindigkeit handelt, sind entsprechende langsame Geschwindigkeiten zu verzeichnen. Auf Basis der bestimmten Umdrehungsgeschwindigkeit können dann ebenfalls beispielsweise Umdrehungsgeschwindigkeitsbereiche bestimmt werden, in welchen die Umdrehung stattfinden müsste. Sollte sich beispielsweise die bestimmte Umdrehungsgeschwindigkeit dann außerhalb dieser Umdrehungsgeschwindigkeitsbereiche befinden, so kann ein weiterer Fehler, beispielsweise ein Sensordefekt, identifiziert werden. Somit kann zuverlässig der Filamentstau bestimmt werden.

Es hat sich weiterhin als vorteilhaft erwiesen, wenn mittels eines Impulsgebers mit einem Magnetring als der Sensor die Drehung erfasst wird. Insbesondere, da die Filamentrolle sich relativ langsam dreht, kann der Impulsgeber als Magnetring ausgeführt werden, sodass der Magnetsensor eine definierte Anzahl von Impulsen für eine Umdrehung der Filamentrolle bekommt. Somit kann zuverlässig der Filamentstau bestimmt werden.

Dabei sieht eine weitere vorteilhafte Ausgestaltungsform vor, dass der Magnetring mit zumindest einer Lücke bereitgestellt wird. Insbesondere weist der Magnetring eine Vielzahl von Lücken auf. Somit kann auch bei geringen Umdrehungsgeschwindigkeiten zuverlässig ein entsprechender Impuls erfasst werden und somit auf die Drehung der Filamentrolle geschlossen werden. Dies ermöglicht eine zuverlässige Bestimmung eines Filamentstaus.

Dabei sieht eine weitere vorteilhafte Ausgestaltungsform vor, dass der Sensor als ein Halbach Array bereitgestellt wird. Insbesondere, um eine unnötige Magnetisierung von beispielsweise eisenhaltigem Filament zu vermeiden, kann der Impulsgeber, also insbesondere die Magnete, als Halbach Array ausgeführt werden. Somit ist es ermöglicht, dass zuverlässig eine Magnetisierung eines beispielsweise eisenhaltigen Filaments vermieden werden kann.

Ebenfalls vorteilhaft ist, wenn eine stärker magnetisierte Seite des Halbach Arrays von der Filamentrolle weg orientiert bereitgestellt wird. Insbesondere wird somit die starke Magnetseite von der Rolle weg zum Magnetsensor zeigend angeordnet, sodass nur ein schwaches Magnetfeld auf das eventuell eisenhaltige Filament einwirken kann.

In einer weiteren vorteilhaften Ausgestaltungsform ist vorgesehen, dass ein Betriebszustand der Dreidimensionalen-Druckeinrichtung mittels der elektronischen Recheneinrichtung überwacht wird und die Bestimmung des Filamentstaus nur bei einem aktiven Betriebszustand der Dreidimensionalen-Druckeinrichtung durchgeführt wird. Insbesondere kann somit die Überwachung für den Filamentstau in Verbindung mit einer Überwachung der elektrischen Stromaufnahme an der Dreidimensionalen-Druckeinrichtung verbunden werden. Insbesondere kann somit die Überwachung der Filamentrollen nur dann aktiv sein, wenn auch ein entsprechendes und 3D-Drucker-typisches Stromsignal anliegt, beispielsweise ein Schwingen von Plus/Minus 300 Watt mit einer Periode von etwa 15 Sekunden. Somit können unnötige Energieverbräuche für die Filamentstaumessung reduziert werden.

Es hat sich weiterhin als vorteilhaft erwiesen, wenn bei einer Nicht-Erfassung einer Drehung eine Warnnachricht für einen Nutzer der Dreidimensionalen-Druckeinrichtung erzeugt wird. Beispielsweise kann die Warnnachricht an der Dreidimensionalen-Druckeinrichtung direkt ausgegeben werden, oder beispielsweise auch über eine Applikation auf ein mobiles Endgerät, beispielsweise ein Smartphone des Nutzers, übertragen werden. Somit kann beim Erkennen des Filamentstaus der Nutzer frühzeitig darüber in Kenntnis gesetzt werden, dass ein Filamentstau vorliegt, und beispielsweise entsprechende Gegenmaßnahmen einleiten.

Ebenfalls vorteilhaft ist, wenn bei einer Nicht-Erfassung einer Drehung ein Druckabbruch durchgeführt wird. Insbesondere kann automatisiert der Druckabbruch durchgeführt werden. Somit kann ein unnötiger Materialverbrauch entsprechend reduziert werden.

Bei dem vorgestellten Verfahren handelt es sich insbesondere zumindest in Teilen um ein computerimplementiertes Verfahren. Daher betrifft ein weiterer Aspekt der Erfindung ein computerlesbares Speichermedium mit zumindest einem Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ein nochmals weiterer Aspekt der Erfindung betrifft daher auch ein computerlesbares Speichermedium mit zumindest dem Computerprogrammprodukt nach dem vorhergehenden Aspekt.

Ebenfalls betrifft die Erfindung auch eine Sensoreinrichtung zum Bestimmen eines Filamentstaus für eine Dreidimensionale-Druckeinrichtung, mit zumindest einem Sensor und einer elektronischen Recheneinrichtung, wobei die Sensoreinrichtung zum Durchführen eines Verfahrens nach dem vorhergehenden Aspekt ausgebildet ist. Insbesondere wird das Verfahren mittels der Sensoreinrichtung durchgeführt.

Weiterhin betrifft die Erfindung auch eine Dreidimensionale-Druckeinrichtung mit zumindest einer Filamentrolle und mit einer Sensoreinrichtung nach dem vorhergehenden Aspekt.

Vorteilhafte Ausgestaltungsformen des Verfahrens sind als vorteilhafte Ausgestaltungsformen des Computerprogrammprodukts, des computerlesbaren Speichermediums, der Sensoreinrichtung sowie der Dreidimensionalen-Druckeinrichtung anzusehen. Die Sensoreinrichtung sowie die Dreidimensionale-Druckeinrichtung weisen hierzu insbesondere gegenständliche Merkmale auf, um entsprechende Verfahrensschritte durchführen zu können.

Unter einer Recheneinheit/elektronische Recheneinrichtung kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale und Merkmalskombinationen der Erfindung ergeben sich aus den Figuren und deren Beschreibung sowie aus den Ansprüchen. Insbesondere müssen weitere Ausführungsformen der Erfindung nicht unbedingt alle Merkmale eines der Ansprüche enthalten. Weitere Ausführungsformen der Erfindungen können Merkmale oder Merkmalskombinationen aufweisen, die nicht in den Ansprüchen genannt sind.

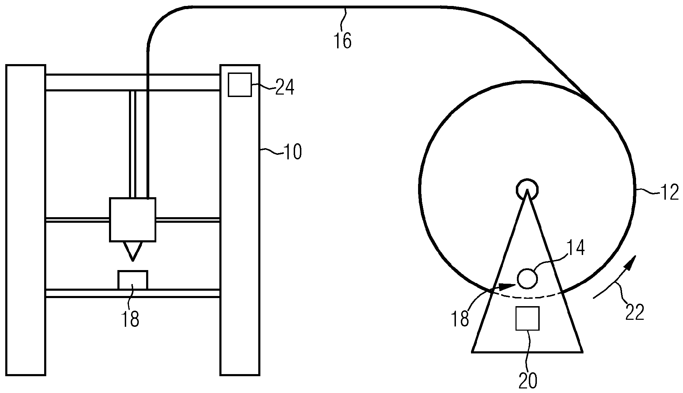

Dabei zeigt die einzige Figur eine schematische Ansicht einer Dreidimensionalen-Druckeinrichtung mit einer Ausführungsform einer Sensoreinrichtung.

In der Figur sind gleiche oder funktionsgleiche Elemente mit den gleichen Bezugszeichen versehen.

Die Figur (FIG) zeigt eine schematische Ansicht einer Ausführungsform einer Dreidimensionalen-Druckeinrichtung 10. Die Dreidimensionale-Druckeinrichtung 10 weist im folgenden Ausführungsbeispiel zumindest eine Filamentrolle 12 sowie eine Sensoreinrichtung 14 auf. Die Sensoreinrichtung 14 ist zum Bestimmen eines Filamentstaus eines Filaments 16 der Dreidimensionalen-Druckeinrichtung 10 ausgebildet. Die Sensoreinrichtung 14 weist hierzu zumindest einen Sensor 18 sowie eine elektronische Recheneinrichtung 20 auf.

Beim erfindungsgemäßen Verfahren zum Bestimmen eines Filamentstaus ist insbesondere vorgesehen, dass der Sensor 18 der Sensoreinrichtung 14 an der Filamentrolle 12 bereitgestellt wird. Es erfolgt das Erfassen einer Drehung 22 der Filamentrolle 12 mittels des Sensors 18 und bei einer Nicht-Erfassung der Drehung 22 erfolgt das Bestimmen des Filamentstaus mittels der elektronischen Recheneinrichtung 20.

Dabei ist insbesondere vorgesehen, dass mittels eines Magnetsensors als der Sensor 18 die Drehung 22 erfasst wird. Insbesondere kann dabei eine Umdrehungsgeschwindigkeit zum Bestimmen der Drehung 22 erfasst werden.

Ferner kann vorgesehen sein, dass mittels eines Impulsgebers mit einem Magnetring als der Sensor 18 die Drehung 22 erfasst wird. Dabei kann der Magnetring insbesondere mit zumindest einer Lücke bereitgestellt werden.

Weiterhin kann vorgesehen sein, dass der Sensor 18 als ein Halbach Array bereitgestellt wird. Hierzu kann ferner vorgesehen sein, dass ein stärker magnetisiertes Halbach Array von der Filamentrolle 12 weg orientiert bereitgestellt wird.

Ebenfalls kann vorgesehen sein, dass ein Betriebszustand der Dreidimensionalen-Druckeinrichtung 10 mittels der elektronischen Recheneinrichtung 20 überwacht wird und die Bestimmung des Filamentstaus nur bei einem aktiven Betriebszustand der Dreidimensionalen-Druckeinrichtung 10 durchgeführt wird.

Ebenfalls kann vorgesehen sein, dass beispielsweise bei einer Nicht-Erfassung der Drehung 22 eine Warnnachricht 24 für einen Nutzer der Dreidimensionalen-Druckeinrichtung erzeugt wird. Ferner kann bei einer Nicht-Erfassung einer Drehung 22 ein Druckabbruch durchgeführt werden.

Insgesamt ist somit vorgesehen, dass ein Impulsgeber, insbesondere in Form eines Magnets, auf die Filamentrolle 12 aufgebracht wird und mit diesem Impulsgeber und einem Magnetsensor die Umdrehungsgeschwindigkeit der Filamentrolle 12 erfasst wird. Da die Filamentrollen 12 sich relativ langsam drehen, kann der Impulsgeber bevorzugt als Magnetring mit Lücken ausgeführt werden, sodass der Magnetsensor eine definierte Anzahl von Impulsen für die Umdrehung der Filamentrolle 12 bekommt. Um eine unnötige Magnetisierung von eisenhaltigem Filament zu vermeiden, kann der Impulsgeber, also die Magnete, insbesondere als Halbach Array ausgeführt werden. Dabei kann die stärkere Magnetseite von der Filamentrolle 12 weg zum Magnetsensor zeigen und damit nur ein schwaches Magnetfeld auf das eisenhaltige Filament einwirken.

Insbesondere lässt sich das Problem bei jedem Filamentdrucker mit einer externen elektronischen Recheneinrichtung sehr einfach und auch preiswert lösen. Auch können mit externen Recheneinheiten auch Filamentrollen 12 überwacht werden, die sich zum Beispiel in einer Trockenbox befinden, was besonders für PVA, also wasserlösliche Filamente, notwendig ist.

Ferner kann die Überwachung in Verbindung mit einer Überwachung der elektronischen Stromaufnahme verbunden werden. Hierbei kann dann die Überwachung der Filamentrollen 12 nur dann aktiv sein, wenn auch ein entsprechendes und 3D-Drucker-typisches Stromsignal, insbesondere Schwingungen von etwa Plus/Minus 300 Watt und einer Periode von etwa 15 Sekunden gemessen beziehungsweise erkannt wurde.

## Patentansprüche

1. Verfahren zum Bestimmen eines Filamentstaus für eine Dreidimensionale-Druckeinrichtung (10) mittels einer Sensoreinrichtung (14), mit den Schritten:
- Bereitstellen eines Sensors (18) der Sensoreinrichtung (14) an einer Filamentrolle (12) der Dreidimensionalen-Druckeinrichtung (10);
- Erfassen einer Drehung (22) der Filamentrolle (12) mittels des Sensors (18); und
- Bei einer Nicht-Erfassung einer Drehung (22), Bestimmen des Filamentstaus mittels einer elektronischen Recheneinrichtung (20) der Sensoreinrichtung (14).

2. Verfahren nach Anspruch 1, **dadurch gekennzeichnet, dass**
mittels eines Magnetsensors als der Sensor (18) die Drehung (22) erfasst wird.

3. Verfahren nach einem der Ansprüche 1 oder 2, **dadurch gekennzeichnet, dass**
eine Umdrehungsgeschwindigkeit zum Bestimmen der Drehung (22) erfasst wird.

4. Verfahren nach einem der vorhergehenden Ansprüche, **dadurch gekennzeichnet, dass** mittels eines Impulsgebers mit einem Magnetring als der Sensor (18) die Drehung (22) erfasst wird.

5. Verfahren nach Anspruch 4, **dadurch gekennzeichnet, dass**
der Magnetring mit zumindest einer Lücke bereitgestellt wird.

6. Verfahren nach einem der vorhergehenden Ansprüche, **dadurch gekennzeichnet, dass**
der Sensor (18) als ein Halbach Array bereitgestellt wird.

7. Verfahren nach Anspruch 6, **dadurch gekennzeichnet, dass**
eine stärker magnetisierte Seite des Halbach Arrays von der Filamentrolle (12) weg orientiert bereitgestellt wird.

8. Verfahren nach einem der vorhergehenden Ansprüche, **dadurch gekennzeichnet, dass**
ein Betriebszustand der Dreidimensionalen-Druckeinrichtung (10) mittels der elektronischen Recheneinrichtung (20) überwacht wird und die Bestimmung des Filamentstaus nur bei einem aktiven Betriebszustand der Dreidimensionalen-Druckeinrichtung (10) durchgeführt wird.

9. Verfahren nach einem der vorhergehenden Ansprüche, **dadurch gekennzeichnet, dass**
bei einer Nicht-Erfassung einer Drehung (22) eine Warnnachricht (24) für einen Nutzer der Dreidimensionalen-Druckeinrichtung (10) erzeugt wird.

10. Verfahren nach einem der vorhergehenden Ansprüche, **dadurch gekennzeichnet, dass** bei einer Nicht-Erfassung einer Drehung (22) ein Druckabbruch durchgeführt wird.

11. Computerprogrammprodukt mit Programmcodemitteln, welche eine elektronische Recheneinrichtung (20) dazu veranlassen, wenn die Programmcodemittel von der elektronischen Recheneinrichtung (20) abgearbeitet werden, ein Verfahren nach einem der Ansprüche 1 bis 10 durchzuführen.

12. Computerlesbares Speichermedium mit zumindest einem Computerprogrammprodukt nach Anspruch 11.

13. Sensoreinrichtung (14) zum Bestimmen eines Filamentstaus für eine Dreidimensionale-Druckeinrichtung (109, mit zumindest einem Sensor (18) und einer elektronischen Recheneinrichtung (20), wobei die Sensoreinrichtung (14) zum Durchführen eines Verfahrens nach einem der Ansprüche 1 bis 10 ausgebildet ist.

14. Dreidimensionale-Druckeinrichtung (10) mit zumindest einer Filamentrolle (12) und mit einer Sensoreinrichtung (14) nach Anspruch 13.
